# EUROPEAN PATENT APPLICATION

(11) **EP 4 571 970 A1**
(43) Date of publication of application: **18.06.2025**
(21) Application number: 23936294.0
(22) Date of filing: 02.08.2023
(51) Int. Cl.: H01M 50/209, H01M 50/249, H01M 50/264, H01M 50/503

(54) **BATTERY AND ELECTRICAL DEVICE**

(30) Priority: 10.05.2023 CN 202321108473 U
(71) Applicant: Contemporary Amperex Technology (Hong Kong) Limited, Central (HK)
(72) Inventor: WU, Kai, Ningde, Fujian 352100 (CN); TANG, Yu, Ningde, Fujian 352100 (CN); XU, Chenyi, Ningde, Fujian 352100 (CN); WANG, Wenli, Ningde, Fujian 352100 (CN); YANG, Haiqi, Ningde, Fujian 352100 (CN); HUANG, Xiaoteng, Ningde, Fujian 352100 (CN)
(74) Representative: Laufhütte, Dieter
(86) International application number: PCT/CN2023/110756
(87) International publication number: WO 2024/229987

(57) **Abstract**

This application discloses a battery and an electric apparatus. The battery includes a plurality of battery cells and a connecting piece, where the battery cells are sequentially stacked, the connecting piece extends in a stacking direction of the battery cells, and the connecting piece is bonded to the plurality of battery cells. The electric apparatus includes the battery described above. This application can solve the technical problems of low reliability and safety of batteries in the prior art.

## Description

This application claims the priority to Chinese Patent Application No. 2023211084734, filed with the China National Intellectual Property Administration on May 10, 2023 and entitled "BATTERY AND ELECTRIC APPARATUS", which is incorporated herein by reference in its entirety.

### TECHNICAL FIELD

This application relates to the technical field of batteries, and in particular to a battery and an electric apparatus.

### BACKGROUND

Batteries are important components of an electric vehicle and play an irreplaceable role.

A battery usually adopts a structural form that a plurality of battery cells are sequentially arranged and connected to form a battery pack. Because battery cells may swell and deform during use, when the plurality of battery cells arranged in sequence all undergo swelling and deformation, the total swelling amount is large, which reduces the reliability and safety of the battery.

### SUMMARY

Embodiments of this application aim to provide a battery and an electric apparatus, including but not limited to solving the technical problems of low reliability and safety of batteries in the prior art.

The technical solutions adopted in the embodiments of this application are as follows:
In a first aspect, a battery is provided. The battery includes a plurality of battery cells and a connecting piece; and the plurality of battery cells are sequentially stacked, the connecting piece extends in a stacking direction of the plurality of battery cells, and the connecting piece is bonded to the plurality of battery cells.

In some embodiments, the battery includes a plurality of battery groups, the plurality of battery groups are sequentially arranged in a first direction, the battery group includes the plurality of battery cells, and the first direction is perpendicular to the stacking direction; and in two adjacent battery groups, a part of the connecting piece is bonded to one battery group, and another part of the connecting piece is bonded to the other battery group.

With the above technical solution, a plurality of battery cells in two adjacent battery groups can be bonded to a same connecting piece, that is, a part of the connecting piece is bonded to one battery group, and another part of the connecting piece is bonded to the other battery group. With two adjacent battery groups bonded through the same connecting piece, the occupation of the connecting piece on the space volume in the battery can be greatly reduced, and thus the energy density of the battery can be further improved.

In some embodiments, the battery includes a plurality of battery modules, the plurality of battery modules are sequentially arranged in the stacking direction, and the battery module includes the plurality of battery groups; and the battery further includes a cross beam, the cross beam extends in the first direction, and the cross beam is arranged between two adjacent battery modules.

With the above technical solution, the cross beam divides the plurality of battery cells inside the battery into different connection regions, and the plurality of battery cells located in different connection regions are bonded to different connecting pieces, so that the extension length of the connecting pieces can be effectively shortened; through the cooperation of the cross beam and the connecting pieces, the swelling and deformation of the plurality of battery cells in each battery module in the stacking direction can be limited, and the connecting pieces and the cross beam bear the swelling pressure of a part of the battery cells respectively, so that the service life of the connecting pieces can be further prolonged, thereby further improving the reliability and safety of the battery provided in this embodiment.

In some embodiments, the connecting piece is bonded to a surface of the battery cell provided with poles.

With the above technical solution, since the plurality of battery cells in the battery are usually not overlapped through the surfaces provided with the poles, bonding the connecting piece to the surfaces of the battery cells provided with the poles can avoid the situation that bonding the connecting pieces on other surfaces of the battery cells leads to gaps between adjacent battery cells and thus reduced energy density of the battery. In other words, bonding the connecting piece to the surfaces of the battery cells provided with the poles has the technical effect of further improving the energy density of the battery.

In some embodiments, the connecting piece is of a flat structure, and a surface of the connecting piece in a thickness direction is bonded to the battery cells.

With the above technical solution, on the one hand, the connecting piece has at least one side surface with a large area in the thickness direction, which can provide a large bonding surface for the connecting piece and the battery cells, so that the bonding between the connecting piece and the battery cells is more stable; on the other hand, the connecting piece has a small space size in the thickness direction thereof, which can reduce the occupation of the internal space of the battery, so that the battery provided in these embodiments has a smaller space volume under the same energy efficiency condition, and is convenient to transport or use.

In some embodiments, the connecting piece has a length dimension in the stacking direction, the connecting piece has a width dimension in the first direction, a ratio of the length dimension to the width dimension ranges from 2 to 30, and the first direction is perpendicular to the stacking direction.

With the foregoing technical solution, the connecting piece can form a long-strip shaped flat structure. In the length direction of the connecting piece, the connecting piece can be used for bonding more battery cells stacked in sequence; and in the width direction of the connecting piece, the connecting piece at least can be used for bonding at least two adjacent battery cells in two adjacent battery groups.

In some embodiments, the surface of the connecting piece in the thickness direction is a bonding surface, the bonding surface is provided with a convex structure, and the convex structure extends in the stacking direction.

With the foregoing technical solution, the overall structural strength of the connecting piece can be effectively increased, and the connecting piece is prevented from breaking or being damaged.

In some embodiments, the battery further includes an adhesive layer, the adhesive layer is bonded between the bonding surface and the battery cells, and the convex structure extends into the adhesive layer.

With the foregoing technical solution, the adhesive area of the connecting piece and the adhesive layer can be effectively increased, the adhesion strength of the connecting piece and the adhesive layer is improved, and the connecting piece and the battery cells are prevented from being separated.

In some embodiments, the battery further includes an integrated board, and the integrated board is arranged between the connecting piece and the battery cells; and the integrated board is provided with an opening, and the connecting piece adheres to the battery cell through the opening.

With the foregoing technical solution, the integrated board can isolate the plurality of battery cells in the battery packs to the space on one side of the battery pack, and through holes for the poles of the battery cells to pass through are reserved in the integrated board, so that only part of the poles of the battery cells are located in the space on the other side of the integrated board, which facilitates the formation of electric connection between the battery cells and an external conductive structure. Moreover, another opening is provided in the integrated board, and the connecting piece can adhere to the battery cell through the opening.

In some embodiments, the integrated board is provided with a plurality of openings, and the plurality of openings are spaced apart in the stacking direction.

With the foregoing technical solution, the connecting piece can form a plurality of bonding positions bonded to the battery cells through the plurality of openings arranged in the stacking direction, which further improves the adhesion strength between the connecting pieces and the battery cells.

In some embodiments, a protrusion structure is provided on the integrated board between two adjacent openings, and the connecting piece is connected to the integrated board through the protrusion structure.

With the foregoing technical solution, a certain distance can be reserved between the connecting piece and the battery cell, so that a space between the connecting piece and the battery cell can be filled with an adhesive layer with a sufficient thickness, so as to avoid separation of the connecting piece from the battery cells.

In some embodiments, the connecting piece is an insulating piece.

With the foregoing technical solution, no additional insulating structure is provided between the connecting piece and the battery cells in the battery by means of the connecting piece made of insulating material, which greatly simplifies the internal structure of the battery, has obvious economic benefits, and can further improve the energy density of the battery provided in this embodiment.

In a second aspect, an electric apparatus is provided. The electric apparatus includes the battery described above.

The battery provided in the embodiments of this application has the following beneficial effects:
the battery provided in the embodiments of this application includes the plurality of battery cells and the connecting piece, where the plurality of battery cells are sequentially stacked, the connecting piece extends in the stacking direction of the plurality of battery cells, and the connecting piece is bonded to the plurality of battery cells. Because the plurality of battery cells are sequentially stacked, the battery cells may swell and deform in the stacking direction thereof after operating for a period of time, and the space size of the battery cells in the stacking direction thereof may become larger, so that the same part of the structures in the battery cells may tend to be away from each other in the stacking direction of the battery cells. The connecting piece extends in the stacking direction of the plurality of battery cells, and each battery cell is bonded to the connecting piece, so that the relative positions of the plurality of battery cells and the connecting piece are fixed. Thus, the trend that the same part of the structures of the plurality of battery cells are away from each other in the stacking direction can be well suppressed, and further the swelling and deformation of each battery cell are limited. When the swelling and deformation of each battery cell are limited, the total swelling and deformation amount of the whole formed by the plurality of battery cells is also small, so the reliability and safety of the battery can be improved.

The electric apparatus according to the embodiment of this application has the following beneficial effects:
due to the adoption of the battery described above, the electric apparatus of the embodiment of this application also has better reliability and safety, which is conducive to realizing the lightweight design of the electric apparatus and improving the service performance of the electric apparatus. The electric apparatus according to the embodiment of this application employs all the technical solutions of all the preceding embodiments, and therefore, achieves all the beneficial effects brought by the technical solutions of the preceding embodiments, the details of which are omitted here.

### BRIEF DESCRIPTION OF DRAWINGS

To describe the technical solutions in the embodiments of this application more clearly, the following briefly describes the accompanying drawings required for describing the embodiments or illustrative art. Apparently, the accompanying drawings in the following description show merely some embodiments of this application, and persons of ordinary skill in the art may still derive other drawings from these accompanying drawings without creative efforts.
FIG. 1 is a schematic structural diagram of a conventional battery with cross beams and longitudinal beams;
FIG. 2 is a schematic structural diagram of a vehicle according to an embodiment of this application;
FIG. 3 is a schematic structural diagram of a battery according to an embodiment of this application;
FIG. 4 is an enlarged view of a partial structure at A in FIG. 3;
FIG. 5 is a schematic structural diagram of a battery according to another embodiment of this application;
FIG. 6 is a schematic structural diagram of a connecting piece according to an embodiment of this application;
FIG. 7 is a schematic structural diagram of a connecting piece according to another embodiment of this application;
FIG. 8 is a schematic structural diagram of a battery according to still another embodiment of this application;
FIG. 9 is a schematic structural diagram of a battery according to yet another embodiment of this application;
FIG. 10 is an enlarged view of a partial structure at B in FIG. 9; and
FIG. 11 is a schematic exploded view of the partial structure at B in FIG. 9.

### DESCRIPTION OF EMBODIMENTS

To make the objectives, technical solutions, and advantages of this application clearer, the following describes this application in further detail with reference to drawings and embodiments. It should be understood that the specific embodiments described herein are merely intended to explain the present invention, but not to limit this application.

It is hereby noted that a component referred to as being "fixed to" or "disposed on" another component may be positioned on the other component directly or indirectly. A component referred to as being "connected to" another component may be directly or indirectly connected to the other component. A direction or a positional relationship indicated by the terms such as "upper", "lower", "left", and "right" is a direction or positional relationship based on the illustration in the drawings, and is merely intended for ease of description but without indicating or implying that the indicated apparatus or component is necessarily located in the specified direction or constructed or operated in the specified direction. Therefore, such terms do not constitute any limitation on this application. A person of ordinary skill in the art may understand the specific meanings of such terms depending on specific situations. The terms "first" and "second" are merely intended for a purpose of ease of description, and shall not be understood as an indication or implication of relative importance or an implicit indication of the number of the technical features. "A plurality of" means two or more, unless otherwise specifically defined.

Batteries are widely used in the life of people, for example, mobile phones, vehicles, cameras and other electronic devices all need batteries to provide energy. With the continuous development of science and technology, the performance and types of batteries are also increasing, bringing more convenience and comfort to the life of people. Electric vehicles are used as an example. As electric vehicles occupy more and more shares in the market, the performance of batteries for electric vehicles is also constantly improved, and the batteries are more environmentally friendly and safer.

To meet the requirements of high power and long battery life of vehicles, for a present battery for vehicles, a plurality of battery cells are usually sequentially arranged and connected to form a battery pack structure with high power and long battery life, which can well meet the requirements of electric vehicles. However, during the use of this kind of battery, it is found that the battery cells in the battery pack may swell and deform after a period of use. At the beginning of the battery design, a plurality of battery cells are designed to be closely arranged to improve the energy density, so after the plurality of closely arranged battery cells all undergo swelling and deformation, the total swelling and deformation amount is quite significant, and other parts of the battery adjacent to the battery cells have to bear considerable swelling force, and even may break or be damaged under huge swelling force, which reduces the reliability and safety of the battery.

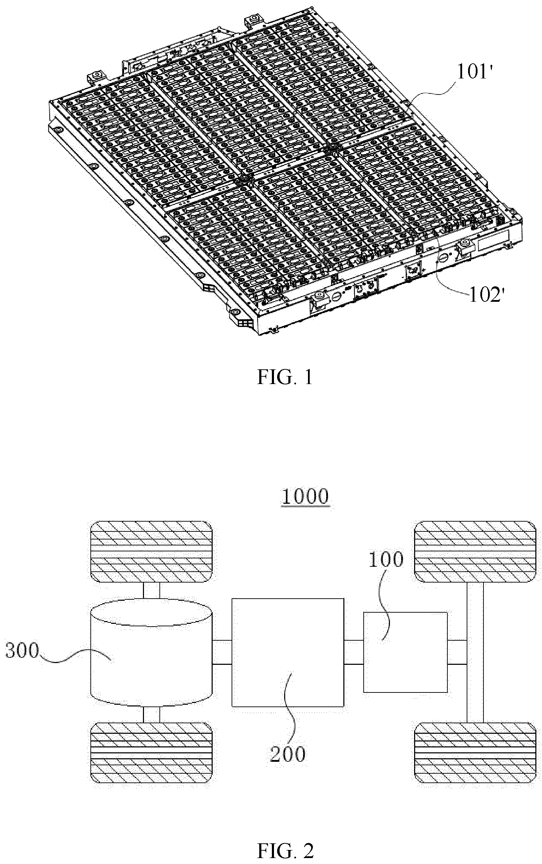

To limit the swelling and deformation of such battery cells, the current practice is to erect cross beams 101' and longitudinal beams 102' inside the battery pack, as shown in FIG. 1, which is a schematic structural diagram of a conventional battery with cross beams and longitudinal beams. The cross beams 101' and the longitudinal beams 102' are connected to form a frame and the plurality of battery cells are fixed in the frame, so that the overall swelling and deformation of the plurality of battery cells can be effectively alleviated. However, the cross and longitudinal beam structure introduced in this method may greatly occupy the space in the battery pack and reduce the volume utilization rate of batteries in the battery pack. Moreover, in order to improve the structural strength and bind the battery cells, the cross beams and the longitudinal beams generally adopt metal structures, which not only increases the weight of the battery pack, but also reduces the energy density and pack assembly efficiency of a system. In addition, the cross and longitudinal beams of the metal structures also need to be insulated from the battery cells and other electrical connecting structures in the battery pack, so it is necessary to reserve space in the battery pack to arrange an insulation structure, which not only increases the cost, but also easily leads to the risk of insulation failure.

In order to solve the current problem of swelling and deformation of battery cells in batteries and avoid the practice of fixing a plurality of battery cells with cross beams and longitudinal beams, this application designs and provides a battery, the battery includes a plurality of battery cells and a connecting piece inside, and the plurality of battery cells are bonded through the connecting piece, which can well limit the total swelling amount of the plurality of battery cells in the stacking direction thereof, effectively improving the use safety of the battery cells 103, thereby improving the overall safety and reliability of the battery.

The battery disclosed in the embodiments of this application can be used for electric apparatus that use a battery as a power source or various energy storage systems that use a battery as an energy storage element. The electric apparatus may be, but is not limited to, a mobile phone, a tablet, a notebook computer, an electric toy, an electric tool, an electric power cart, an electric vehicle, a ship, a spacecraft, or the like. The electric toy may include a fixed or mobile electric toy, for example, a game console, an electric toy car, an electric toy ship, and an electric toy airplane. The spacecraft may include an airplane, a rocket, a space shuttle, a spaceship, and the like.

For ease of description, an electric apparatus according to an embodiment of this application being a vehicle 1000 is used as an example for description of the following embodiments.

Referring to FIG. 2, FIG. 2 is a schematic structural diagram of the vehicle 1000 according to an embodiment of this application. The vehicle 1000 may be an oil-fueled vehicle, a natural gas vehicle, or a new energy vehicle. The new energy vehicle may be a battery electric vehicle, a hybrid electric vehicle, an extended-range electric vehicle, or the like. The vehicle 1000 is provided with a battery 100 inside, and the battery 100 may be disposed at the bottom, front, or rear of the vehicle 1000. The battery 100 may be configured to supply power to the vehicle 1000. For example, the battery 100 may be used as an operational power supply for the vehicle 1000. The vehicle 1000 may further include a controller 200 and a motor 300. The controller 200 is configured to control the battery 100 to supply power to the motor 300, for example, to meet the requirements for operating power of the vehicle 1000 during start, navigation and driving.

In some embodiments of this application, the battery 100 can be used as not only the operational power supply for the vehicle 1000 but also a driving power supply for the vehicle 1000 to replace or partially replace fossil fuel or natural gas to provide driving traction for the vehicle 1000.

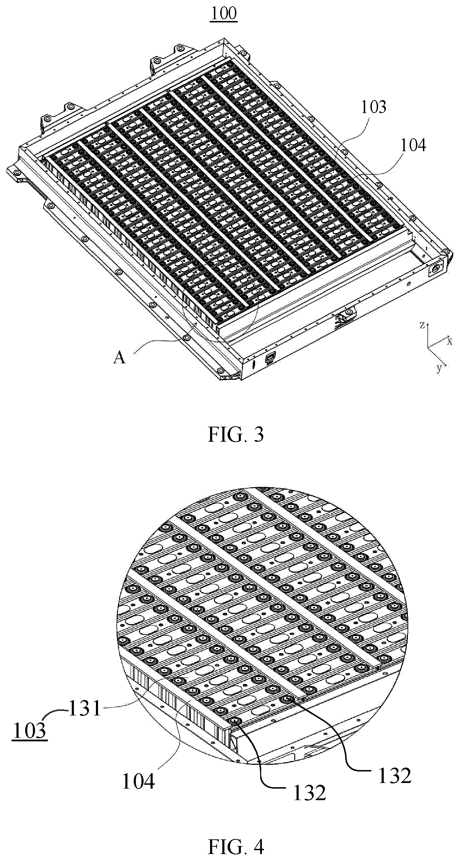

Referring to FIG. 3, FIG. 3 is a schematic structural diagram of the battery 100 according to an embodiment of this application. The battery includes a plurality of battery cells 103 and a connecting piece 104.

The battery cell 103 refers to the smallest unit that constitutes the battery 100, and usually includes an end cover, a shell, a cell assembly and other functional components. The battery cell 103 may be a secondary battery or a primary battery, and may be a lithium-sulfur battery, a sodium-ion battery, or a magnesium-ion battery, without being limited thereto. In addition, the battery cell 103 may be a cylinder, a flat body, a cuboid or in other shapes. In the battery 100, a plurality of battery cells 103 may be arranged. The plurality of battery cells 103 may be independently arranged or form a whole battery module 122. In the battery 100, the plurality of battery cells 103 may be directly connected in series or in parallel or in series-parallel to form a whole, or the plurality of battery cells 103 may be connected in series or in parallel or in series-parallel to form battery modules 122, and then the plurality of battery modules 122 are connected in series or in parallel or in series-parallel to form a whole. The battery 100 can also include other structures, for example, the battery 100 can also include a busbar component for realizing electrical connection between the plurality of battery cells 103.

The connecting piece 104 is a structure used for connecting the plurality of battery cells 103, and the shape, structure and material thereof are not limited in this embodiment. As for the shape and structure of the connecting piece 104, the shape of the connecting piece 104 in this embodiment includes, but is not limited to, a cylinder, a flat body, a cuboid or other shapes commonly used in the art. As for the preparation material of the connecting piece 104, the connecting piece 104 in this embodiment can be made of metal, nonmetal, polymer and other materials. In this embodiment, the connecting piece 104 is used for bonding at least two battery cells 103, and the bonding methods between the connecting piece 104 and the battery cells 103 include, but are not limited to, organic adhesive, inorganic adhesive, solid adhesive, liquid adhesive and the like. One or more surfaces of the connecting piece 104 can be used as a bonding surface 141 between the connecting piece 104 and the battery cells 103, and are coated with adhesive.

In the battery 100 according to this embodiment of this application, the plurality of battery cells 103 are sequentially stacked, and the connecting piece 104 extends in the stacking direction of the battery cells 103 and is bonded to the battery cells 103. Battery cells 103 of a cuboid structure are used as an example. The plurality of battery cells 103 may be sequentially stacked in a length direction, width direction, diagonal direction or other directions of the battery cells 103. To facilitate the explanation of the principle that the battery 100 according to the embodiment of this application has better reliability and safety, this embodiment takes the plurality of battery cells 103 being sequentially stacked in the width direction of the battery cells 103 as an example. It can be understood that the embodiment in which the plurality of battery cells 103 are sequentially stacked in the length direction, diagonal direction or other directions of the battery cells 103 and bonded through the connecting piece 104 has the same working principle as that in this embodiment. Details are not described again.

In the structure of the battery 100 in which the plurality of battery cells 103 are sequentially stacked in the width direction of the battery cells 103, the battery cells 103 may swell and deform in the width direction thereof after operating for a period of time, and the space size of the battery cells 103 in the width direction thereof becomes larger, which may make the same part of the structures of the battery cells 103 tend to be away from each other in the width direction. The connecting piece 104 extends in the stacking direction of the plurality of battery cells 103, and each battery cell 103 is bonded to the connecting piece 104, so that the relative positions of the plurality of battery cells 103 and the connecting piece 104 are fixed. Thus, the trend that the same part of the plurality of battery cells 103 are away from each other in the width direction can be well suppressed, and further the swelling and deformation of each battery cell 103 can be limited. After the swelling and deformation of each battery cell 103 are limited, the total swelling and deformation amount of the whole formed by the plurality of battery cell 103 is also small, so the reliability and safety of the battery 100 can be improved.

It can be understood that the plurality of battery cells 103 inside the battery 100 can be stacked in different directions, so a plurality of connecting pieces 104 can be provided to extend in different directions respectively, so as to limit the total swelling and deformation amount of the plurality of battery cells 103 stacked in different directions. The total swelling and deformation amount of the plurality of battery cells 103 stacked in different directions can also be limited by providing a connecting piece 104 extending in different directions respectively. In addition, when the plurality of battery cells 103 are stacked in one direction, the connecting piece 104 can be bonded to a top surface 131, a bottom surface, side surfaces or other surfaces of each battery cell 103, with the same technical effect achieved. Details are not described again.

Further, in this embodiment, referring to FIG. 3, FIG. 4 and FIG. 5, the connecting piece 104 is bonded to a surface of the battery cell 103 provided with poles 132. The poles 132 described in this embodiment refer to a structure of a battery cell 103 used for being connected to other battery cells 103 or an external conductor. Generally speaking, because the poles 132 have the foregoing connection function, the plurality of battery cells 103 inside the battery 100 may not be sequentially stacked with the surfaces provided with the poles 132 as abutting surfaces, but are sequentially stacked through other surfaces of the battery cells 103 without the poles 132.

A battery cell 103 of a cuboid structure is used as an example. The surface of the battery cell provided with the poles 132 is usually the top surface 131, while in the battery 100 including a plurality of battery cells 103 of a cuboid structure, the plurality of battery cells 103 are generally sequentially stacked through four sides adjacent to the top surface 131 of the battery cell. Therefore, bonding the connecting piece 104 to the top surfaces 131 of the battery cells 103 can avoid the situation that bonding the connecting piece 104 on other surfaces of the battery cells 103 leads to gaps between adjacent battery cells 103 and thus reduced energy density of the battery 100. In other words, with the connecting piece 104 bonded to the surfaces of the battery cells 103 provided with the poles 132, the technical effect of further improving the energy density of the battery 100 is achieved.

In some embodiments of this application, referring to FIG. 3 and FIG. 4, FIG. 4 is an enlarged view of a partial structure at A in FIG. 3. The battery includes a plurality of battery groups 121, and the plurality of battery groups 121 are sequentially arranged in the first direction. The battery group 121 described in these embodiments means that the plurality of battery cells 103 included in the battery 100 are divided into a plurality of groups, and the plurality of battery cells 103 in each group have the same stacking direction. According to the operating principle of the connecting piece 104 described in the previous embodiment, it can be known that the connecting piece 104 should be bonded to at least two battery cells 103 to limit the swelling and deformation of the battery cells 103. Therefore, the plurality of battery cells 103 included in each battery group 121 in these embodiments can also be understood as that each battery group 121 includes at least two battery cells 103. According to the structural arrangement of the battery group 121 described above, in the battery 100 provided in this embodiment, a plurality of battery cells 103 included in at least a part of the region are arranged to include a plurality of battery groups 121 sequentially arranged in the first direction, and each battery group 121 includes at least two battery cells 103.

The first direction in this embodiment is set to be perpendicular to the stacking direction of the plurality of battery cells 103 in each group. As shown in FIG. 3, the first direction is the X-axis direction in FIG. 3; and the stacking direction of the plurality of battery cells 103 is the Y-axis direction in FIG. 3. Therefore, it can be understood that when each group includes a same number of battery cells 103, the plurality of battery groups 121 form a rectangular array structure. According to the battery 100 provided with the battery groups 121, the plurality of battery cells 103 in two adjacent battery groups 121 can be bonded to the same connecting piece 104, that is, a part of the connecting piece 104 is bonded to one of the battery groups 121, and the other part of the connecting piece 104 is bonded to the other battery group 121. With two adjacent battery groups 121 bonded through the same connecting piece 104, the space volume occupation of the connecting piece 104 in the battery 100 can be greatly reduced, and thus the energy density of the battery 100 can be increased. It can be understood that when the number of battery cells 103 included in each battery group 121 is different, the foregoing implementation that adjacent battery groups 121 are jointly bonded to the same connecting piece 104 can also be adopted, which has the same principle and is not repeated.

On the basis of the foregoing embodiment in which the first direction is perpendicular to the stacking direction of the plurality of battery cells 103 in each group, in some other embodiments of this application, the plurality of battery groups 121 in the first direction are closely arranged, so that the plurality of battery cells 103 distributed in the first direction are also stacked, which can also be regarded as the structure of the battery groups 121 described in this embodiment. The plurality of battery cells 103 being sequentially stacked in the width direction of the battery cells 103 to form a battery group 121 is used as an example. The first direction being perpendicular to the stacking direction of the plurality of battery cells 103 in the battery group 121 actually means that the plurality of battery groups 121 are sequentially arranged in the length direction of the battery cells 103. When the plurality of battery groups 121 are closely arranged in the first direction, in fact, the plurality of battery cells 103 are sequentially stacked in the length direction of the battery cells 103, the battery cells 103 sequentially stacked in the length direction of the battery cells 103 can be regarded as one battery group 121, and the plurality of battery groups 121 are arranged in the width direction of the battery cells 103. In this part of this embodiment, the connecting piece 104 may be arranged to extend in the length direction of the plurality of battery cells 103, and is used for bonding the plurality of battery cells 103 arranged in the length direction. Certainly, two battery groups 121 adjacent to each other in the width direction of the battery cells 103 can also be bonded to the same connecting piece 104.

On the basis of the foregoing embodiment in which the first direction is perpendicular to the stacking direction of the plurality of battery cells 103 in each group, in some other embodiments of this application, the connecting piece 104 can also be provided with an extension part extending in the stacking direction of the plurality of battery cells 103 and an extension part extending in the first direction. The same connecting piece 104 can be used to bond a plurality of battery cells 103 located in two directions. It should be noted that in some other embodiments of this application, the first direction may also be set to have an angle with respect to the stacking direction of the plurality of battery cells 103 in one battery group 121. For example, when the battery cells 103 are of a cylindrical structure, one of the battery groups 121 is closely arranged with the adjacent battery groups 121 in such a way that each battery cell 103 is arranged in space formed by two adjacent battery cells 103 in another group. It can be understood that the embodiment in which the first direction is set to have an angle with respect to the stacking direction of the plurality of battery cells 103 in one battery group 121 and the embodiment in which the first direction is perpendicular to the stacking direction of the plurality of battery cells 103 in one battery group 121 have the same bonding method with the connecting piece 104, which is not repeated.

It can be understood that the connecting piece 104 can be bonded to the central region or the edge region of the surface of the battery cell 103 provided with the poles 132. For one battery group 121, the same technical effect is achieved regardless of whether the connecting piece 104 is disposed in the central region or the edge region of the surface of the battery cell 103 provided with the poles 132. For the foregoing embodiment in which the plurality of battery groups 121 are sequentially arranged in the first direction, because two adjacent battery groups 121 are set to be jointly bonded to the same connecting piece 104, the width dimension of the connecting piece 104 in the first direction can be significantly reduced when the connecting piece 104 is disposed in the edge region of the surface of the battery cell 103 provided with the poles 132, so the occupation of the connecting piece 104 on the internal space volume of the battery 100 is reduced, and the energy density of the battery 100 is improved on the other hand.

A battery cell 103 of a cuboid structure is used as an example. The edge position of the top surface 131 of the battery cell 103 is actually the shoulder position of the battery cell 103. In the embodiment in which a plurality of battery groups 121 are provided, as shown in FIG. 3 to FIG. 5, the width dimension of the connecting piece 104 in the first direction can be significantly reduced by bonding the connecting piece 104 to the shoulders of two battery cells 103 adjacent to each other in the first direction, so as to achieve the purpose of reducing the occupation of the connecting piece 104 on the internal space volume of the battery 100.

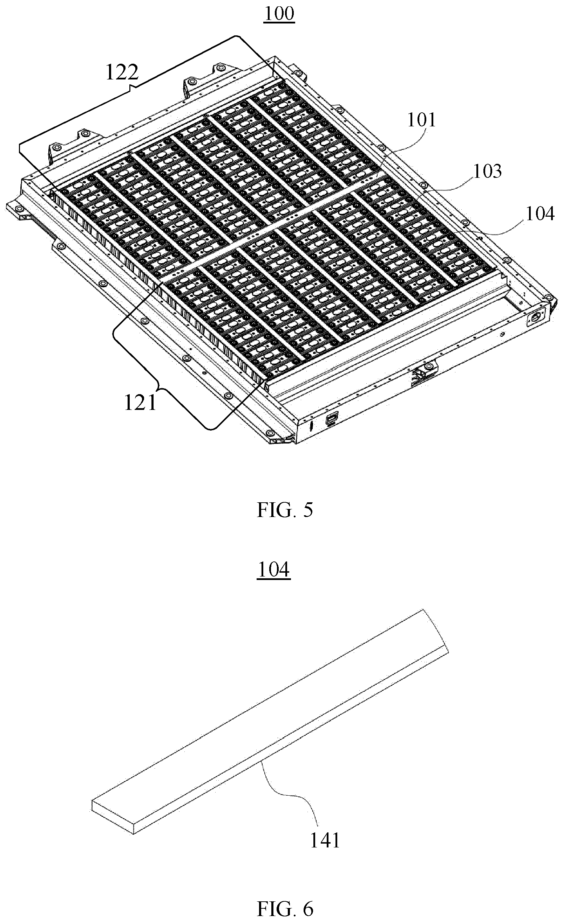

In some embodiments of this application, referring to FIG. 5, FIG. 5 is a schematic structural diagram of a battery 100 according to another embodiment of this application. The battery includes a plurality of battery modules 122. The battery module 122 refers to the whole including a plurality of battery groups 121. Because the plurality of battery groups 121 actually constitute the arrangement region of a part of the battery cells 103 in the battery 100, the battery modules 122 provided in these embodiments actually divide the plurality of battery cells 103 in the battery 100 into different regions.

The plurality of battery modules 122 are sequentially arranged in the stacking direction of the battery cells 103. The battery 100 provided in this embodiment further includes a cross beam 101, and the cross beam 101 extends in the first direction and is arranged between two adjacent battery modules 122. The cross-sectional shape of the cross beam 101 in the extension direction thereof is not limited, including but not limited to circular, rectangular, square or other polygonal shapes commonly used in the art. The cross beam 101 in this embodiment is used to be fixed inside the battery 100 and to limit the swelling and deformation of the plurality of battery cells 103 in each battery module 122 in the stacking direction of the battery cells.

It can be understood that when more battery cells 103 are sequentially stacked in one direction, if the plurality of battery cells 103 are bonded only through the connecting piece 104, the extension length of the connecting piece 104 may be too long, and the connecting piece 104 is prone to bending deformation or damage, which affects the reliability and safety of the battery 100. Therefore, by providing the structure of the cross beam 101 in this embodiment, on the one hand, the plurality of battery cells 103 inside the battery 100 are divided into different connection regions, and the plurality of battery cells 103 located in different connection regions are bonded to different connecting pieces 104, which can effectively shorten the extension length of the connecting pieces 104 and prolong the service life of the connecting pieces 104. In this embodiment, by providing the structure of the cross beam 101, on the other hand, the cross beam 101 cooperates with the connecting pieces 104 to limit the swelling and deformation of the plurality of battery cells 103 in each battery module 122, and the connecting pieces 104 and the cross beam 101 bear the swelling pressure of a part of the battery cells 103 respectively, which can further prolong the service life of the connecting pieces 104, thereby further improving the reliability and safety of the battery 100 provided in this embodiment.

Certainly, in some other embodiments of this application, it is also possible to bond all the battery cells 103 distributed in the same stacking direction only through the connecting piece 104 without providing the cross beam 101, which can also have the technical effect of limiting the swelling and deformation of the plurality of battery cells 103. In the actual production process of the battery 100, it can be flexibly selected according to the size of the space left inside the battery 100, which has the characteristics of flexible use.

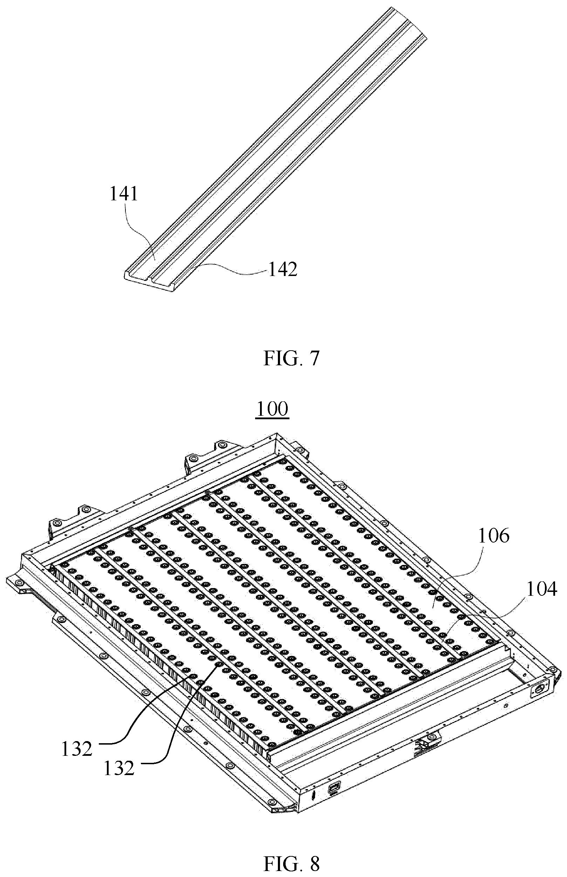

In some embodiments of this application, referring to FIG. 6 and FIG. 7, FIG. 6 is a schematic structural diagram of a connecting piece according to an embodiment of this application; and FIG. 7 is a schematic structural diagram of a connecting piece according to another embodiment of this application. The connecting piece 104 is specifically arranged as a flat structure, and the connecting piece 104 is bonded to the battery cells 103 through a surface in the thickness direction of the connecting piece. It can be understood that compared with a structure in another shape, the flat structure, on the one hand, has at least one side surface with a large area in the thickness direction, which can provide a large bonding surface 141 for the connecting piece 104 and the battery cells 103, so that the bonding between the connecting piece and the battery cells is more stable; on the other hand, the flat structure has a small space size in the thickness direction thereof, which can reduce the occupation of the internal space of the battery 100, so that the battery 100 provided in this embodiment has a smaller space volume under the same energy efficiency condition, and is convenient to transport or use. In this embodiment, the shape of one side surface of the connecting piece 104 for bonding with the battery cell 103 is not limited, and a circular, rectangular, square or polygonal structure commonly used in the art can be selected.

The battery cell 103 of a cuboid structure is used as an example. When the connecting piece 104 is bonded to the top surface 131 of the battery cell 103 through the surface located in the thickness direction of the connecting piece, the overall thickness of the battery cell 103 and the connecting piece 104 after bonding is still close to the thickness of the battery cell 103, thereby effectively avoiding the obvious change of the space size of the battery 100 in the thickness direction of the battery cell 103. Moreover, even when the connecting piece 104 is bonded between two opposite sides in the stacking direction through the surface located in the thickness direction of the connecting piece, a smaller space can be formed between the two opposite side surfaces, so that the battery 100 provided in this embodiment still has high energy density.

In some embodiments of this application, referring to FIG. 6 and FIG. 7, the extension length of the connecting piece 104 in the stacking direction of the plurality of battery cells 103 is defined as the length dimension of the connecting piece 104, and the extension length of the connecting piece 104 in the first direction is defined as the width dimension of the connecting piece 104, the stacking direction being perpendicular to the first direction. In this embodiment, the ratio of the length dimension to the width dimension of the connecting piece 104 is further limited to 2-30, that is, the length dimension of the connecting piece 104 is 2-30 times the width dimension thereof.

With the length dimension and the width dimension of the connecting piece 104 further limited, it can be known that the connecting piece 104 provided in this embodiment is defined as a long strip structure. On the basis of the aforementioned embodiment in which the connecting piece 104 is arranged as a flat structure, by setting the ratio of the length dimension to the width dimension of the connecting piece 104 of the flat structure to be 2-30, the connecting piece 104 in some embodiments of this application can form a long-strip shaped flat structure. In the length direction of the connecting piece 104, the connecting piece 104 can be used for bonding more battery cells 103 stacked in sequence; and in the width direction of the connecting piece 104, the connecting piece 104 can be used for bonding at least two adjacent battery cells 103 in two adjacent battery groups 121.

In this embodiment, the limited range of the ratio of the length dimension to the width dimension of the connecting piece 104 is a preferred dimension obtained through many experimental data. Certainly, under the condition that the internal space of the battery 100 is sufficient, a wider and thicker connecting piece 104 can not only be used for bonding more battery cells 103, but also obviously improve the structural strength of the connecting piece 104 so that the connecting piece is not prone to being damaged, thereby improving the reliability and safety of the battery 100 provided in this embodiment. It should be noted that in the case of a limited internal space of the battery 100, the connecting piece 104 can be installed in the battery 100 more conveniently by reducing the thickness of the connecting piece 104. In this part of the operating condition, the structural strength of the connecting piece 104 can be improved by increasing the width dimension of the connecting piece 104. In the production process of the battery 100, connecting pieces 104 with different length and width dimensions can be flexibly selected according to the actual size of the internal space of the battery 100.

In some embodiments of this application, referring to FIG. 6 and FIG. 7, the surface of the connecting piece 104 in the thickness direction thereof is defined as the bonding surface 141, and the connecting piece 104 is bonded to the battery cell 103 through the bonding surface 141 of the connecting piece. As can be seen from the foregoing embodiments, the shape of the bonding surface 141 is not limited, and can be selected as circular, rectangular, square and polygonal shapes commonly used in the art. In this embodiment, the bonding surface 141 is further provided with a convex structure 142, and the convex structure 142 extends in the stacking direction of the plurality of battery cells 103. With the convex structure 142 provided on the bonding surface 141, the overall structural strength of the connecting piece 104 can be effectively increased, and the connecting piece 104 is prevented from breaking or being damaged.

It can be understood that the convex structure 142 is a protruding part of the bonding surface 141 of the connecting piece 104, and any convex structure 142 of any shape can achieve the technical effect of improving the overall strength of the connecting piece 104, so the specific shape of the convex structure 142 in the extension direction thereof may not be limited in this embodiment, including but not limited to semicircular, rectangular, square, fan-shaped and other shapes in the art. In addition, the convex structure 142 can be further arranged to be in arc transition with the bonding surface 141, and the overall structural strength of the connecting piece 104 can be further improved by means of the arc transition between the convex structure 142 and the bonding surface 141.

In some embodiments of this application, the bonding surface 141 of the connecting piece 104 can also be provided with anti-skid lines, and the friction coefficient between the connecting piece 104 and the battery cell 103 is increased by means of the anti-skid lines, so as to better position the relative positions of the connecting piece 104 and the battery cell 103. It can be understood that the anti-skid lines described in this embodiment can be applied to both the embodiment in which the connecting piece 104 is provided with the convex structure 142 and the embodiment in which the connecting piece 104 is provided with no convex structure 142. In addition, in the embodiment in which the connecting piece 104 is generally arranged as a flat structure, the connecting piece 104 is usually provided with two relatively large surfaces. In the case where one of the large surfaces is the bonding surface 141, the other surface of the connecting piece 104 opposite to the bonding surface 141 can also be provided with a convex structure 142, which can further improve the overall structural strength of the connecting piece 104. The setting mode of the shape of the convex structure 142 on this surface and the connection mode with the connecting piece 104 can be the same as those of the convex structure 142 on the bonding surface 141 of the connecting piece 104, which is not repeated.

On the basis of the aforementioned embodiment in which the bonding surface 141 of the connecting piece 104 is provided with the convex structure 142, in some embodiments of this application, the battery 100 further includes an adhesive layer 105, the adhesive layer 105 is bonded between the bonding surface 141 and the battery cell 103, and the convex structure 142 extends into the adhesive layer 105. In these embodiments, the adhesive layer 105 is a structural layer made of colloidal material, and the connecting piece 104 is connected to the battery cell 103 through the adhesive layer 105. As the convex structure 142 extends into the adhesive layer 105, the adhesive area between the connecting piece 104 and the adhesive layer 105 can be effectively increased, the adhesion strength between the connecting piece 104 and the adhesive layer 105 is improved, and the connecting piece 104 and the battery cell 103 are prevented from being separated.

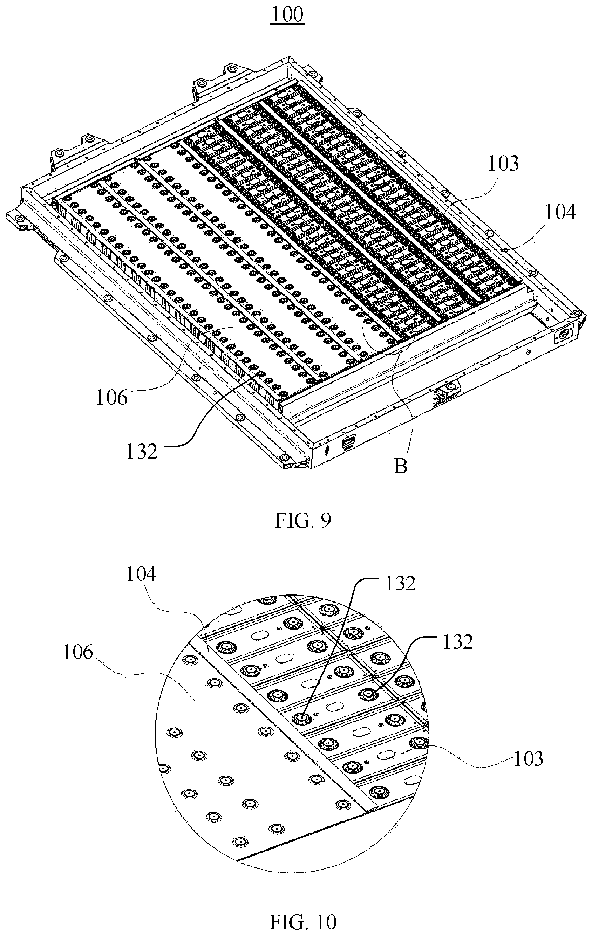

In some embodiments of this application, referring to FIG. 8 and FIG. 9, FIG. 8 is a schematic structural diagram of a battery 100 according to another embodiment of this application; and FIG. 9 is a schematic structural diagram of a battery 100 according to yet another embodiment of this application. The battery 100 further includes an integrated board 106, and the integrated board 106 is provided between the connecting piece 104 and the battery cells 103. Generally, the battery 100 is generally provided with an integrated board 106 inside. The integrated board 106 is used to isolate the plurality of battery cells 103 in the space on one side of the battery pack, and through holes for the poles 132 of the battery cells 103 to pass through are reserved in the integrated board 106, so that only part of the poles 132 of the battery cells 103 are located in the space on the other side of the integrated board 106, which facilitates the formation of electric connection between the battery cells 103 and an external conductive structure. It can be understood that only one entire integrated board 106 can be arranged inside the battery 100, or the above technical purpose of isolating the battery cells 103 can be achieved by providing a plurality of integrated boards 106.

The integrated board 106 provided in this embodiment is different from the existing integrated board 106 in the art in that the integrated board 106 is additionally provided with an opening 161, so that the connecting piece 104 can adhere to the battery cells 103 through the opening 161. According to the use of the opening 161 on the integrated board, it can be known that the shape of the opening 161 is not limited, and as a circular, rectangular, square or other polygonal structure commonly used in the art can be selected. In the actual production process of the battery 100, the inside of the openings 161 provided in the integrated board 106 can be filled with the adhesive layer 105, a part of the adhesive layer 105 is used for adhering to the connecting piece 104, and another part of the adhesive layer 105 is used for adhering to the battery cell 103, so as to achieve the technical purpose of adhesion between the connecting piece 104 and the battery cells 103.

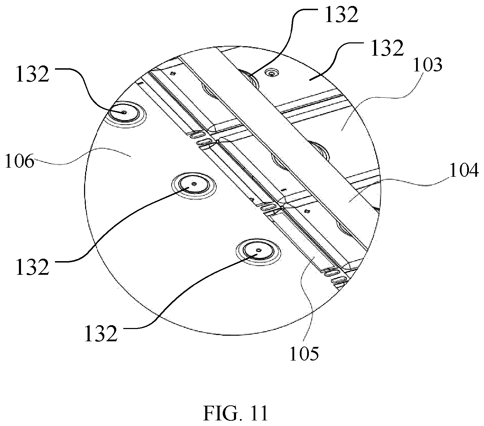

On the basis of the above embodiment in which the integrated board 106 is provided with the opening 161, in some other embodiments of this application, referring to FIG. 10, FIG. 10 is an enlarged view of a partial structure at B in FIG. 9. The integrated board 106 is provided with a plurality of openings 161 and the openings 161 are spaced apart in the stacking direction. According to the structure of the integrated board 106, the connecting piece 104 can form a plurality of bonding positions for bonding with the battery cells 103 through the plurality of openings 161 arranged in the stacking direction, which further improves the adhesion strength of the connecting piece 104 and the battery cells 103. On the basis of the embodiment in which the integrated board 106 is provided with a plurality of openings 161, in some embodiments, referring to FIG. 11, FIG. 11 is a schematic exploded view of the partial structure at B in FIG. 9. A protrusion structure 162 is provided on the integrated board 106 between two adjacent openings 161, and the connecting piece 104 is connected to the integrated board 106 through the protrusion structure 162. The protrusion structure 162 is provided in this embodiment to reserve a certain distance between the connecting piece 104 and the battery cells 103, and accordingly the space between the connecting piece 104 and the battery cells 103 is filled with the adhesive layer 105 with a sufficient thickness, so as to avoid separation of the connecting piece 104 from the battery cells 103.

According to the description of the function of the protrusion structure 162, it can be known that the specific shape of the protrusion structure 162 provided in this embodiment is not limited, and can be a cylinder, a flat body, a cuboid or other shapes commonly used in the art. Further, in some other embodiments of this application, the integrated board 106 is provided with a plurality of protrusion structures 162 and the heights of the plurality of protrusion structures 162 are set to be the same, so that the adhesive layer 105 between the connecting piece 104 and the battery cells 103 can be uniform in thickness in the stacking direction of the battery cells 103.

In all the aforementioned embodiments of this application, referring to FIG. 3 to FIG. 11, the connecting piece 104 can be further set as an insulating piece. As compared with the existing structure of metal cross and longitudinal beams in the art, no additional insulating structure is provided between the connecting piece 104 and the battery cell 103 in the battery 100 by means of the connecting piece 104 made of insulating material, which greatly simplifies the internal structure of the battery 100, has obvious economic benefits, and can further improve the energy density of the battery 100 provided in this embodiment.

In another embodiment of this application, an electric apparatus is provided. The electric apparatus includes the battery 100 provided in any of the above embodiments. Due to the adoption of the battery 100 described above, the electric apparatus of the embodiment of this application also has better reliability and safety, which is conducive to realizing the lightweight design of the electric apparatus and improving the service performance of the electric apparatus. The electric apparatus according to this embodiment of this application employs all the technical solutions of all the preceding embodiments, and therefore, achieves all the beneficial effects brought by the technical solutions of the preceding embodiments, the details of which are omitted here.

The foregoing descriptions are merely preferable embodiments of this application, but are not intended to limit this application. Any modification, equivalent replacement, or improvement made without departing from the spirit and principle of this application shall fall within the protection scope of this application.

The above embodiments are merely optional embodiments of this application, but not intended to limit this application. For persons skilled in the art, this application may have various changes and variations. Any modifications, equivalent replacements, improvements, and the like made without departing from the spirit and principles of this application shall fall within the scope of claims of this application.

## Claims

1. A battery, **characterized in that**
the battery comprises a plurality of battery cells and a connecting piece, wherein
the plurality of battery cells are sequentially stacked, the connecting piece extends in a stacking direction of the plurality of battery cells, and the connecting piece is bonded to the plurality of battery cells.

2. The battery according to claim 1, **characterized in that**
the battery comprises a plurality of battery groups, the plurality of battery groups are sequentially arranged in a first direction, the battery group comprises the plurality of battery cells, and the first direction is perpendicular to the stacking direction; and
in two adjacent battery groups, a part of the connecting piece is bonded to one battery group, and another part of the connecting piece is bonded to the other battery group.

3. The battery according to claim 2, **characterized in that**
the battery comprises a plurality of battery modules, the plurality of battery modules are sequentially arranged in the stacking direction, and the battery module comprises the plurality of battery groups; and
the battery further comprises a cross beam, the cross beam extends in the first direction, and the cross beam is arranged between two adjacent battery modules.

4. The battery according to any one of claims 1 to 3, **characterized in that** the connecting piece is bonded to a surface of the battery cell provided with poles.

5. The battery according to any one of claims 1 to 4, **characterized in that**
the connecting piece is of a flat structure, and a surface of the connecting piece in a thickness direction of the connecting piece is bonded to the battery cells.

6. The battery according to any one of claims 1 to 5, **characterized in that**
the connecting piece has a length dimension in the stacking direction, the connecting piece has a width dimension in the first direction, a ratio of the length dimension to the width dimension ranges from 2 to 30, and the first direction is perpendicular to the stacking direction.

7. The battery according to claim 5, **characterized in that**
the surface of the connecting piece in the thickness direction of the connecting piece is a bonding surface, the bonding surface is provided with a convex structure, and the convex structure extends in the stacking direction.

8. The battery according to claim 7, **characterized in that**
the battery further comprises an adhesive layer, the adhesive layer is bonded between the bonding surface and the battery cells, and the convex structure extends into the adhesive layer.

9. The battery according to any one of claims 1 to 8, **characterized in that**
the battery further comprises an integrated board, and the integrated board is arranged between the connecting piece and the battery cells; and
the integrated board is provided with an opening, and the connecting piece adheres to the battery cell through the opening.

10. The battery according to claim 9, **characterized in that**
the integrated board is provided with the plurality of openings, and the plurality of openings are spaced apart in the stacking direction.

11. The battery according to claim 10, **characterized in that**
a protrusion structure is arranged on the integrated board between two adjacent openings, and the connecting piece is connected to the integrated board through the protrusion structure.

12. The battery according to any one of claims 1 to 11, **characterized in that**
the connecting piece is an insulating piece.

13. An electric apparatus, **characterized by**
comprising the battery according to any one of claims 1 to 12.
